# EUROPEAN PATENT SPECIFICATION

(11) **EP 3 890 388 B1**
(45) Date of publication and mention of the grant of the patent: **30.11.2022**
(21) Application number: 19892382.3
(22) Date of filing: 09.10.2019
(51) Int. Cl.: H04L 41/0806, H04L 41/12, H04L 41/5041, H04L 41/0895, H04L 41/40, H04W 24/02, H04L 41/0893

(54) **METHOD FOR RADIO ACCESS NETWORK CONFIGURATION, NETWORK MANAGEMENT EQUIPMENT, AND STORAGE MEDIUM**
VERFAHREN FÜR FUNKZUGANGSNETZWERKKONFIGURATION, NETZWERKVERWALTUNGSEINRICHTUNG UND SPEICHERMEDIUM
PROCÉDÉ DE CONFIGURATION DE RÉSEAU D'ACCÈS RADIO, ÉQUIPEMENT DE GESTION DE RÉSEAU ET SUPPORT DE MÉMOIRE

(30) Priority: 03.12.2018 CN 201811467389
(43) Date of publication of application: 06.10.2021
(73) Proprietor: ZTE Corporation, Shenzhen, Guangdong 518057 (CN)
(72) Inventor: LIU, Zhenggang, Shenzhen, Guangdong 518057 (CN)
(74) Representative: Novagraaf Technologies
(86) International application number: PCT/CN2019/110148
(87) International publication number: WO 2020/114070

(56) References cited:
- EP-A1- 2 257 002
- WO-A1-2018/127144
- WO-A1-2018/144983
- CN-A- 106 550 410
- US-A1- 2017 141 973
- US-A1- 2017 208 019
- US-A1- 2018 123 878
- Anonymous: "Universal Mobile Telecommunications System (UMTS); LTE; Telecommunication management; Generic Network Resource Model (NRM) Integration Reference Point (IRP); Information Service (IS)", Telecommunication Management 3GPP TS 28.622, no. V15.1.0, 30 June 2018 (2018-06-30), pages 1-27, XP055713422,
- Ericsson: "Slice management modelling", 3GPP TSG SA WG5, 25 August 2017 (2017-08-25), pages 1-4, XP055713426,

## Description

### TECHNICAL FIELD

The present disclosure relates to communication technology, in particular, to a method and an apparatus for configuring access network, a network management device and a storage medium.

### BACKGROUND

Mobile communication technology has evolved from 4G to 5G. Compared with 4G, 5G has undergone tremendous changes. For example, in terms of equipment, a 5G radio access network (RAN) is no longer a base station including a building base band unit (BBU) and radio remote unit (RRU) in a 4G RAN, but is a central unit (CU) and a distributed unit (DU), or even further a central unit-control plane (CU-C), a central unit-user plane (CU-U), a baseband processing unit (BPU), and a radio processing unit (RPU), and the like.

In terms of service, 5G RAN is not limited to a user equipment (UE), but is applied to varied scenarios such as a mobile broadband, a large-scale Internet of Things, and Internet of Things. A number of 5G RAN connections has increased exponentially, and networks are getting increasingly complicated.

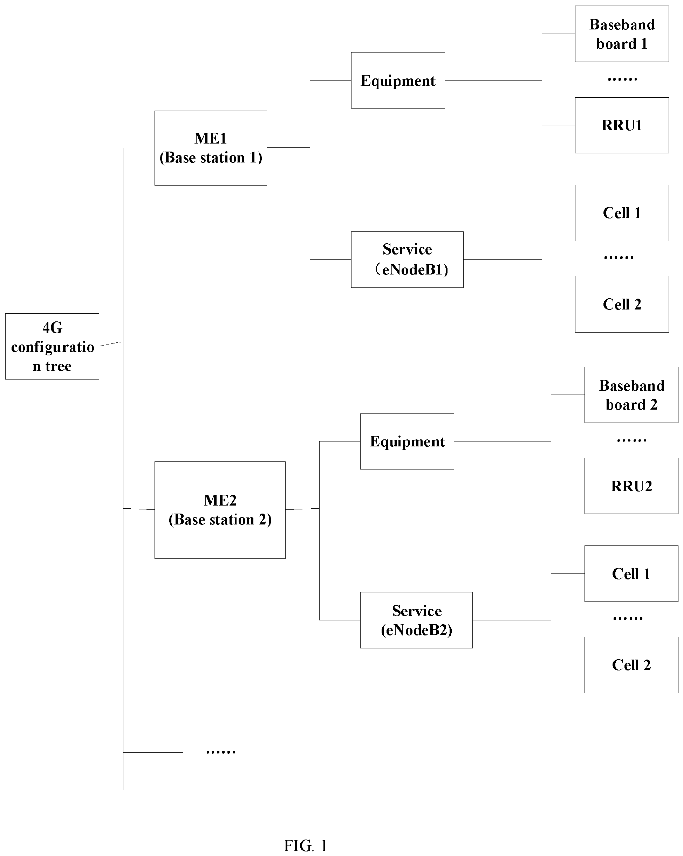

The above tremendous differences between 5G and 4G lead to a fact that a former mode for configuring access network of the RAN fails to meet a requirement by a 5G RAN. For example, in a mode for configuring access network of the 4G RAN, each managed element (ME) is a base station, in which both equipment and service (that is, eNodeB) are configured. That is, one base station and the service named eNodeB thereof belong to one ME. FIG. 1 shows a tree for configuring the access network of a 4G RAN. This mode for configuring access network is only applied to an equipment in which each base station includes a BBU and an RRU, and each base station have a relatively independent service. In a 5G RAN, however, there are various types of equipment with varied functions, and one service may be completed through cooperation among a plurality of equipment. Accordingly, an existing mode for configuring access network fails to meet a requirement by a 5G RAN, which is not advantageous for popularization of 5G technology.

WO2018127144 A1 relates to a method for managing a network slice instance, comprising: a network manager sending a first configuration request to a first network element manager, the configuration request comprising one or more of the following: description information of a second network slice instance subnet, description information of a network slice instance to be created and description information of a first network slice instance subnet; receiving a configuration response message sent by the first network element manager; sending an association request to a second network element manager, the association request comprising description information of the network slice instance to be created; and receiving an association response message sent by the second network element manager, wherein the association response message is used for indicating that the second network slice instance subnet has served the network slice instance to be created, and network slice instance formation is completed. By means of said method for managing a network slice instance, the association of at least two network slice instance subnets may be carried out so as to form a complete network slice instance.

WO2018144983 A1 relates to methods and apparatuses for network resource modelling to support next generation node Bs, including: generate and send a configuration management ("CM") command to an element manager ("EM") or element manager function ("EMF") to create, modify, or delete an information object class ("IOC") that is to represent a next generation node B ("gNB"), wherein the IOC is a gNB Function IOC to represent the gNB, a Central Unit ("CU") IOC to represent a CU of the gNB, a Distributed Unit ("DU") IOC to represent a DU of the gNB, or a next generation universal terrestrial radio access network ("GUTRAN") Cell IOC to represent a GUTRAN cell to be provided by the gNB; and process a response from the EM to determine a result of a CM operation performed based on the CM command.

### SUMMARY

Embodiments of the present disclosure provide a method, a network management device and a computer-readable storage medium to provide a new method for configuring a radio access network. The invention is set out in the appended set of claims.

An example comprises method for configuring access network, which includes: configuring an equipment tree, the equipment tree including at least one equipment managed element (ME); configuring a bearing tree, configuring a bearing tree including configuring a reference relationship between at least one bearing ME included in the bearing tree and an equipment ME in the equipment tree; and configuring a service tree, configuring a service tree including configuring a reference relationship between at least one service ME in the service tree and a bearing ME in the bearing tree.

An example comprises apparatus for configuring access network, which includes: a module for configuring an equipment tree, the equipment tree including at least one equipment ME; a module for configuring a bearing tree, configuring a bearing tree including configuring a reference relationship between at least one bearing ME in the bearing tree and an equipment ME in the equipment tree; and a module for configuring a service tree, configuring a bearing tree including configuring a reference relationship between at least one service ME in the service tree and a bearing ME in the bearing tree.

An example comprises a network management device, which includes a processor, a memory and a communication bus, the communication bus configured to connect the processor and the memory, the processor configured to execute a computer program stored in the memory to perform steps of the method for configuring access network as described above.

An example comprises a computer-readable storage medium storing one or more computer programs executable by one or more processors to perform steps of the method for configuring access network as described above.

Other features and advantages will be described in details in the following of the present disclosure. It should be appreciated that at least some advantages are obvious based on the content of the present disclosure.

### BRIEF DESCRIPTION OF THE DRAWINGS

FIG. 1 shows a schematic diagram of a tree for configuring access network of 4G RAN in existing technologies.
FIG. 2 shows a flowchart of a method for configuring access network in the present disclosure.
FIG. 3 shows a schematic diagram of an equipment tree in the present disclosure
FIG. 4 shows a schematic diagram of a bearing tree in the present disclosure.
FIG. 5 shows a schematic diagram of a service tree in the present disclosure.
FIG. 6 shows a schematic diagram of a reference relationship between the equipment tree and the bearing tree in the present disclosure.
FIG. 7 shows a schematic diagram of a reference relationship between the service tree and the bearing tree in the present disclosure within an enabled time period of service (that is, slice 2).
FIG. 8 shows a schematic diagram of a reference relationship between the service tree and the bearing tree in the present disclosure beyond the enabled time period of the slice 2
FIG. 9 shows a schematic flow diagram of configuring service managed element (ME) for providing a type of timing service in the present disclosure.
FIG. 10 shows a schematic flow diagram of an ME configuration of a requirement of a temporary increase of service in the present disclosure.
FIG. 11 shows a schematic diagram of a reference relationship between the equipment tree, the bearing tree and the service tree in the present disclosure.
FIG. 12 shows another schematic diagram of a reference relationship between the equipment tree, the bearing tree and the service tree in the present disclosure.
FIG. 13 shows a schematic diagram of a structure of an apparatus for configuring access network in the present disclosure.
FIG. 14 shows a schematic diagram of a structure of a network management device in the present disclosure.

### DETAILED DESCRIPTION

In order to make objectives, technical solution and advantages of the present disclosure clearer, some embodiments of the present disclosure will be explained below in detail with reference to accompanying drawings and implementation. It should be understood that specific embodiments described here is only used to explain the present disclosure but not put a limitation to the present disclosure.

### Embodiment 1

This embodiment provides a method for configuring access network, in which an equipment tree, a bearing tree and a service tree are configured respectively. Then, the equipment tree and the bearing tree, and the bearing tree and the service tree are connected through a reference relationship. A reference relationship between a bearing ME of the bearing tree and an equipment ME of the equipment tree indicates which equipment ME is used by the bearing ME (i.e., a bearing function). A reference relationship between a service ME of the service tree and the bearing ME of the bearing tree indicates which bearing ME is used by the service ME. Through configuration of three trees as above, the equipment tree and the service tree may be configured separately, and a flexible reference connection between the equipment tree and the service tree may be implemented through the bearing tree, so that the equipment tree and the service tree are adaptive to more and more requirements by a 5G RAN in terms of types and amount. In addition, when there are a large number of equipment MEs and service MEs in terms of type and amount, a configuration and management would be more convenient and clearer through configuration of the three trees, thereby a network would have a best effect, which is advantageous for popularization of the 5G technology.

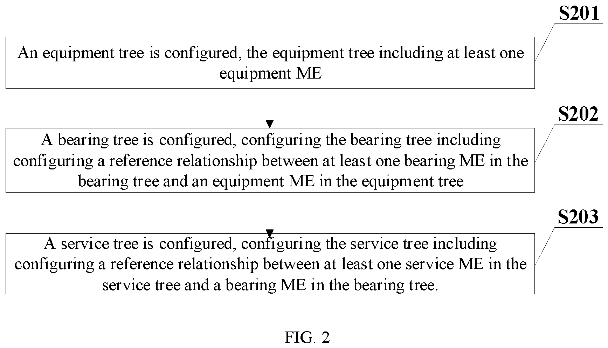

In order to facilitate understanding, in this embodiment, a method for configuring access network is shown for exemplary description in the following. It shall be understood that apart from the 5G RAN, the method for configuring access network is also adaptive to a 4G RAN or another RAN scenario. With reference to FIG. 2, the method for configuring access network exemplified in this embodiment is as follows.

In step S201, an equipment tree is configured, the equipment tree including at least one equipment ME.

In one example of this embodiment, all equipment in one network may be managed in one equipment tree, i.e., an entire network is a topology. Alternatively, it shall be understood that in other examples, equipment in one network may be grouped into two or more equipment trees for management.

In this embodiment, the equipment ME may be an equipment unit manageable by any network management device. For example, the equipment ME may be, but is not limited to, any one of: a central unit (CU), a distributed unit (DU), a central unit-control plane (CU-C), a central unit-user plane (CU-U), a radio processing unit (RPU), a baseband processing unit (BPU), a distributed radio access network (DRAN) and a base station (BS).

In this embodiment, during equipment tree configuration, when a new equipment is detected to be added into a network, the new added equipment may be any one of equipment units as exemplified in the above. That is, the new added equipment may be taken as one equipment ME to be added to the equipment tree for configuration. When a particular equipment ME in the equipment tree is detected to be removed, the particular equipment ME may be deleted from the equipment tree. When resources of a particular equipment ME in the equipment tree are detected to be updated, configuration information of the equipment ME may be updated correspondingly in the equipment tree. For example, when a computer unit or a baseband board are detected to be added to a particular equipment ME in the equipment tree, an update to increase resources of the equipment ME in the equipment tree may be correspondingly performed . When a computer unit or a baseband board are detected to be reduced in a particular equipment in the equipment tree, an update to decrease resources of the equipment ME in the equipment tree may be correspondingly performed. That is, in this embodiment, the equipment tree may be configured either statically or dynamically, which is flexibly set as required.

In this embodiment, configuring an equipment ME in the equipment tree includes, but is not limited to, configuring at least one of: a transmission parameter, a single board parameter, frame information, rack information, a remote radio unit (RRU) parameter.

The transmission parameter in this embodiment may include, but is not limited to, various parameters required for communication between a network management device and an equipment ME

The single board in this embodiment may include, but is not limited to, at least one of: a main control board, a computing board and a baseband board. The single board parameter in this embodiment includes, but is not limited to, at least one of a location parameter, an attribute parameter, a function parameter and an operation parameter of the single board.

When an equipment ME is set on a frame, information of the frame where the equipment ME is located may be configured. The frame information may include, but is not limited to, at least one of: location information and identification information of the frame.

When an equipment ME is configured on a rack, information of a rack where the equipment ME is located may be configured, the rack information may include, but is not limited to, at least one of location information and identification information of the rack.

The RRU parameter in this embodiment includes, but is not limited to, at least one of: a location parameter, an attribute parameter, a function parameter and an operation parameter of the RRU.

In this embodiment, when configuring an equipment ME, specific contents to be configured may be flexibly selected according to, but not limited to, at least one of: a particular type and a requirement of a particular application scenario of the equipment ME.

In step S202, a bearing tree is configured, configuring the bearing tree including configuring a reference relationship between at least one bearing ME in the bearing tree and an equipment ME in the equipment tree.

It should be understood that in this embodiment, there is no strict implementation order for S202 and S201. S201 may be implemented before S202. Alternatively, S202 may be implemented at a certain time while S201 is not implemented. Alternatively, S201 and S202 may be implemented synchronously at a certain time.

In this embodiment, a reference relationship between a bearing ME in the bearing tree and an equipment ME in the equipment tree may be configured upon configuring the bearing ME of the bearing tree, or may be configured in real time when the bearing ME is being referenced by a service ME. Alternatively, a reference relationship between one part of bearing MEs and corresponding equipment MEs thereof may be configured upon configuring the bearing ME, while a reference relationship between the other part of bearing MEs and corresponding equipment MEs thereof may be configured when the bearing MEs are referenced by a service ME. It shall be understood that configuration manners to be used may be flexibly selected.

In this embodiment, the bearing ME may be configured in real time according to a current network service requirement. Alternatively, a particular number of the bearing MEs may be configured first, and the number of the bearing ME may be increased or reduced according to a subsequent service requirement.

In this embodiment, configuring the bearing ME of the bearing tree includes, but is not limited to, configuring a type of the bearing ME. In addition, the specific type of the bearing MEs may be flexibly set according to a service requirement. For example, the type of the bearing MEs includes, but is not limited to, at least one of:
controller plane function (CPF), user plane function (DPF), baseband plane function (BPF), baseband plane function (RPF).

In this embodiment, configuring the reference relationship between the bearing ME of the bearing tree and the equipment ME in the equipment tree (that is, corresponding to the bearing ME of the bearing tree) may be, but not limited to, selecting the equipment ME (corresponding to the bearing ME of the bearing tree) from the equipment ME in the equipment tree according to a type of the bearing ME. The equipment ME (corresponding to the bearing ME of the bearing tree) includes, but are not limited to, the equipment ME whose type corresponds to types of the bearing MEs, i.e., the equipment ME which may perform functions of the bearing ME. The equipment ME (corresponding to the bearing ME of the bearing tree) may further include the equipment ME which is not distributed to other bearing MEs. Alternatively, the equipment ME (corresponding to the bearing ME of the bearing tree) may further include the equipment ME which is distributed to other bearing MEs, but the equipment ME distributed to other bearing MEs may still be time-division-multiplexed or synchronously used with a current bearing ME (that is, the bearing ME corresponding to the equipment ME distributed to other bearing MEs).

In this embodiment, when a particular bearing ME of the bearing tree is deleted, an equipment ME referenced by the particular bearing ME is released, so that the released equipment ME is referenced by another bearing ME, thereby promoting coordination and use efficiency of resources.

In this embodiment, when a type of a particular bearing ME in the bearing tree changes, an equipment ME referenced the particular bearing ME whose type has changed can also be updated accordingly.

In this embodiment, when an equipment ME referenced by a particular bearing ME is deleted from the equipment tree or a state of the equipment ME becomes unavailable, an equipment ME may be updated adaptively for the bearing ME

In configuring the bearing tree, an entire network may be taken as a topology, i.e., all bearing MEs in the network are configured in one bearing tree. Alternatively, a plurality of bearing trees may be used to perform configuring bearing MEs in one network as required. For example, according to types of bearing MEs, one bearing ME may be taken as one bearing tree.

In step S203, a service tree is configured, configuring the service tree including configuring a reference relationship between at least one service ME in the service tree and a bearing ME in the bearing tree.

In this embodiment, services in various network application scenarios may be respectively configured in a corresponding sub-service tree to be managed, so that the service tree may be better meet application scenarios with services of multiple types and large amount. For example, with regard to the 5G RAN in which a number of connections increases exponentially, a network is increasingly more complicated and network slicings emerge accordingly. Network slicings substantially divide a physical network of a network provider into a plurality of virtual networks according to different service requirements such as time delay, bandwidth, safety and reliability, so as to flexibly meet various network application scenarios. For example, a machine dialogue of a timing service (or static type of service) service like water meter reading may only have to be in operation in some fixed days each month. Therefore, in the present embodiment, one network slice may be taken as one sub-service tree, and the service ME in one network slice is located in a sub-service tree corresponding to the network slice. In addition, the network slice may be configured by the slicing provider itself, each service ME being one base station (that is, gNodeB in 5G).

In this embodiment, when a particular service ME of the sub-service tree is deleted, a bearing ME referenced by the particular service ME and the particular service ME are released, so as to facilitate the bearing ME being referenced by another ME in need.

In this embodiment, configuring the reference relationship between a service ME and a bearing ME in the bearing tree may include, but is not limited to: selecting a bearing ME corresponding to the service ME from among the bearing ME of the bearing tree according to a service requirement of the service ME. The service requirement in this embodiment may include, but is not limited to, at least one of: a bandwidth requirement and a service time requirement.

In this embodiment, when a particular service ME of the sub-service tree is a service ME for providing a type of timing service, enabled time period of a reference relationship between the service ME for providing a type of timing service and a bearing ME corresponding to the service ME for providing a type of timing service is configured according to a service time period of the service ME for providing a type of timing service. During a time beyond the enabled time period, the bearing ME may be distributed to another service ME in need, thereby further promoting use efficiency of the bearing ME. For example, when the particular service ME is the timing service ME for providing a type of timing service and a service time period thereof is from 00:00 on the 10^{th} day to 00:00 on the 12^{th} day each month, the enabled time period of the reference relationship between the service ME for providing a type of timing service and a bearing ME corresponding to the service ME for providing a type of timing service may be configured as from 00:00 on the 10^{th} day to 00:00 on the 12^{th} day each month.

In this embodiment, resource requirements of some service MEs may be changing. For example, a bandwidth of a particular service ME may need to be increased within a time period. In order to meet the need, in this embodiment, configuring the reference relationship between the service ME and the bearing ME in the bearing tree may further include, but not limited to, the following dynamic configuration procedures.

A bearing ME corresponding to a particular service ME is updated according to a resource requirement change to the service ME when the resource requirement of the service ME changes.

Further to the above embodiments, if a bandwidth of a particular service ME is predicted to be increased by 100M in need on a basis of an original bandwidth within a subsequent time period of t1 to t2, a corresponding equipment ME needs to be added for the particular service ME during the time period of t1 to t2 to meet the need. In addition, after t2, added equipment MEs and some of original equipment MEs may be released out to retain a current need for the particular service ME. This dynamic configuration procedure not only meets a dynamic change in a service resource requirement, but also promotes a resource use efficiency as much as possible, thereby resulting in meeting service requirements of various types in a better way and enabling the network to have a best effect.

### Embodiment 2

In order to facilitate understanding, based on the above embodiment, the access network configuration is exemplified in a 5G RAN application scenario.

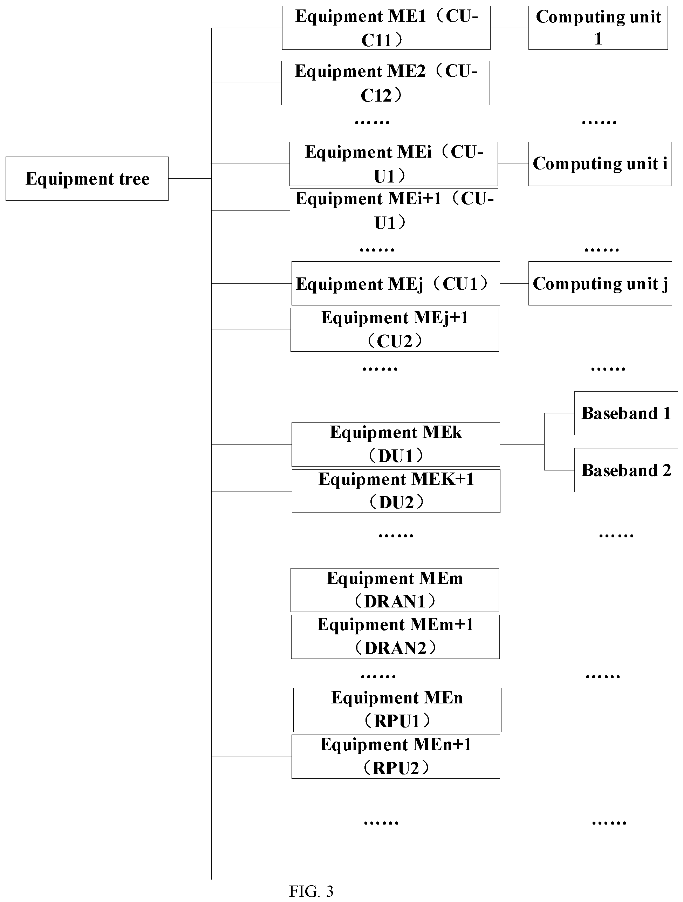

With reference to FIG. 3, the figure shows a part of the equipment tree of an exemplary 5G RAN in this embodiment. Each equipment ME in the equipment tree is a network element manageable by a network management device. Configuring each equipment ME includes, but is not limited to, configuring a transmission parameter, a single board parameter (for an equipment ME having a single board), frame information (for an equipment ME provided in a frame or a having a frame), rack information (for an equipment ME provided in a rack or having a rack), and an RRU parameter (for an equipment ME having an RRU) of the equipment ME. As shown in FIG. 3, the equipment ME in the equipment tree include, but is not limited to, CU-C, CU-U, CU, DU (may include BPU), DRAN and RPU. It shall be understood that the equipment ME in the equipment tree may be flexibly set according to a type of a network, a specific network architecture or an application scenario, or may be dynamically updated.

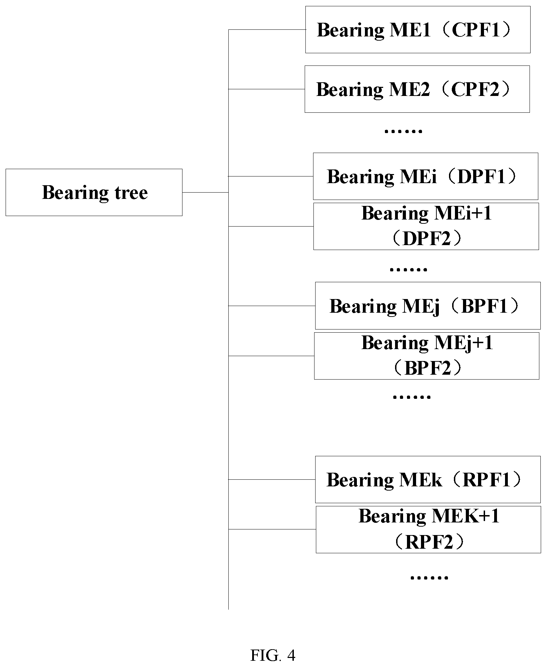

FIG. 4 shows a part of the bearing tree of the exemplary 5G RAN in this embodiment. Each bearing ME in the bearing tree may be of a bearing type that a service in a corresponding access network needs to implement. For example, the bearing tree shown in FIG. 4 includes bearing MEs whose types include, but are not limited to, CPF, DFF, RPF. It shall be understood that a specific number and type of the bearing ME in the bearing tree may be flexibly set and may be dynamically updated.

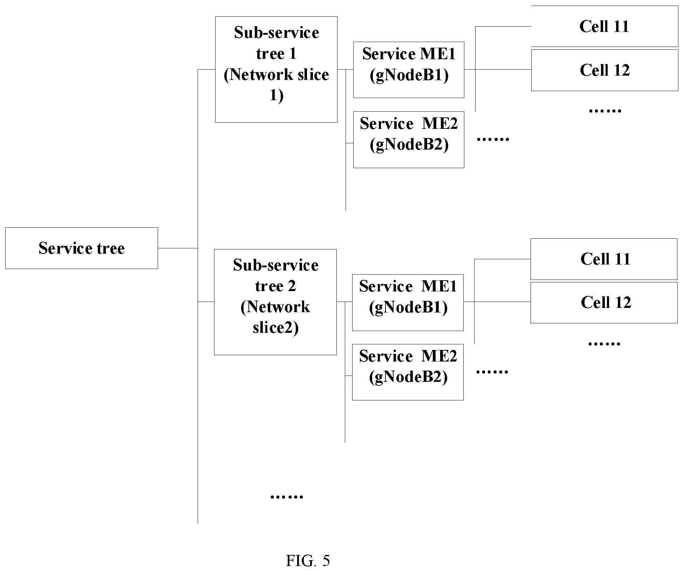

FIG. 5 shows a part of the service tree of the exemplary 5G RAN in this embodiment. The service tree includes at least one sub-service tree, and one network slice corresponds to one sub-service tree, for example, as shown in FIG. 5, a network slice 1 and a network slice 2 respectively correspond to a sub-service tree 1 and a sub-service tree 2. In this embodiment, a general provider may see all network slices, each of which may be an independent service topology, i.e., an independent sub-service tree. Each service ME of the network slice is one gNodeB, and each gNodeB may include one or more cells. It shall be understood that the sub-service trees in the service tree and the service MEs in the sub-service trees may be updated dynamically.

During implementation, reference relationships between the equipment tree, the bearing tree and the service tree may be implemented flexibly according to a current requirement. In order to facilitate understanding, some reference relationships are shown for exemplary description in this embodiment.

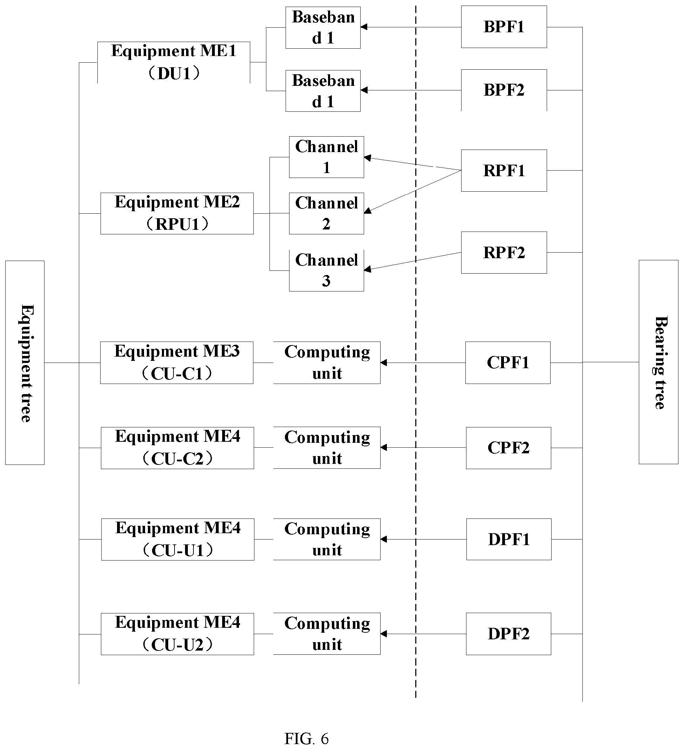

For example, FIG. 6 shows a schematic diagram of a reference relationship between the equipment tree and an ME in the bearing tree in the 5G RAN. In FIG. 6, BPF1 and BPF2 of the bearing tree respectively correspond to baseband board 1 and baseband board 2 of ME1 of the equipment tree. RPF1 corresponds to a channel 1 and a channel 2 of a radio frequency unit of an equipment ME2. RPF2 corresponds to a channel 3 of the radio frequency unit of the equipment ME2. CPF1 and CPF2 respectively correspond to a computing unit of an equipment ME3 and an equipment ME4. DPF1 and DPF2 respectively correspond to a computing unit of an equipment ME5 and an equipment ME6.

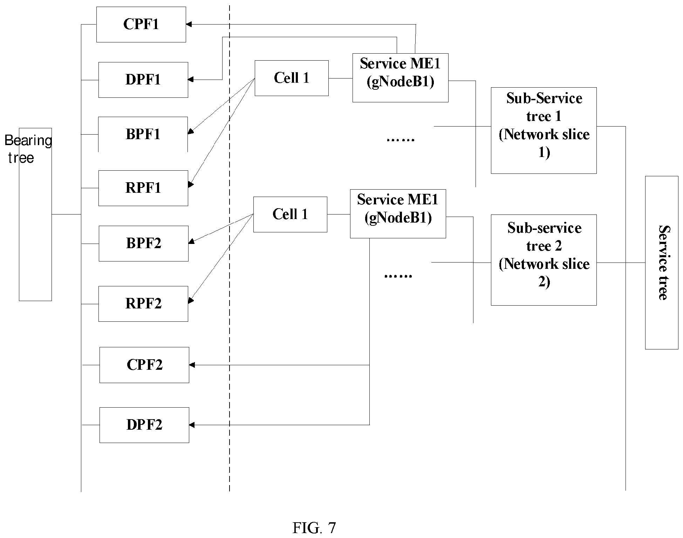

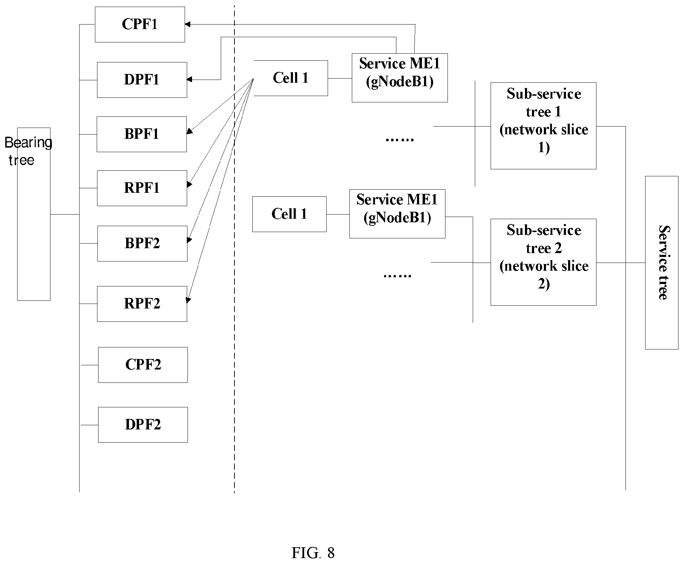

FIG. 7 shows a schematic diagram of a reference relationship between a service tree in the 5G RAN and an ME in the bearing tree. In FIG. 7, a gNodeB of a service ME1 of the network slice 1 (i.e., the sub-service tree 1) corresponds to CPF1 and DPF1 of the bearing tree, and a cell 1 of the service ME1 of the network slice 1 corresponds to BPF1 and RPF1 of the bearing tree. A gNodeB of a service ME1 of the network slice 2 corresponds to CPF2 and DPF2 of the bearing tree, and a cell 1 of the service ME1 of the network slice 2 corresponds to BPF2 and RPF2 of the bearing tree. The service ME1 of the network slice 2 (i.e., sub-service tree 2, which may be Internet of Things 1 in this example) may only be enabled (for example, water meter reading) during some fixed days each month, i.e., it may be a service ME for providing a type of timing service. The reference relationship between the service ME1 of the network slice 2 and a bearing ME corresponding to the service ME1 of the network slice 2 may be a configuration effective only during an enabled time period, beyond which at least one of BPF2, RPF2, CPF2 and DPF2 may be referenced by another service ME. For example, as shown in FIG. 8, at a time beyond the enabled time period, BPF2 and RPF2 are referenced by cell 1 of the service ME1, thereby use efficiency of BPF2 and RPF2 may be increased.

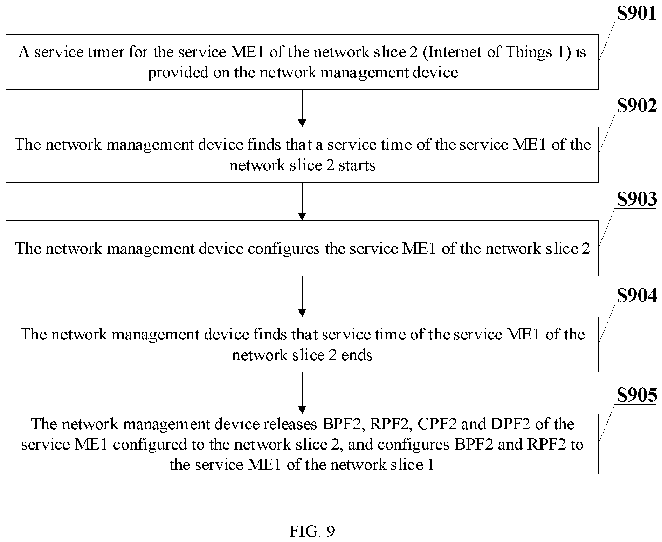

Herein, a configuration process of the service ME for providing a type of timing service is seen in steps shown in FIG. 9.

In step S901, a service timer (for starting and ending times and dates each month) for the service ME1 of the network slice 2 (Internet of Things 1) is provided on the network management device.

In step S902, the network management device finds that a service time of the service ME1 of the network slice 2 starts.

In step S903, the network management device configures the service ME1 of the network slice 2: to configure BPF2, RPF2, CPF2 and DPF2 to a gNodeB1 and the Cell1 of the service ME1 of the network slice 2 (in one example, if the above are already configured to another slice, other bearing MEs corresponding to the service ME1 may be released or selected first).

In step S904, the network management device finds that service time of the service ME1 of the network slice 2 ends.

In step S905, the network management device releases BPF2, RPF2, CPF2 and DPF2 of the service ME1 configured to the network slice 2, and configures BPF2 and RPF2 to the service ME1 of the network slice 1.

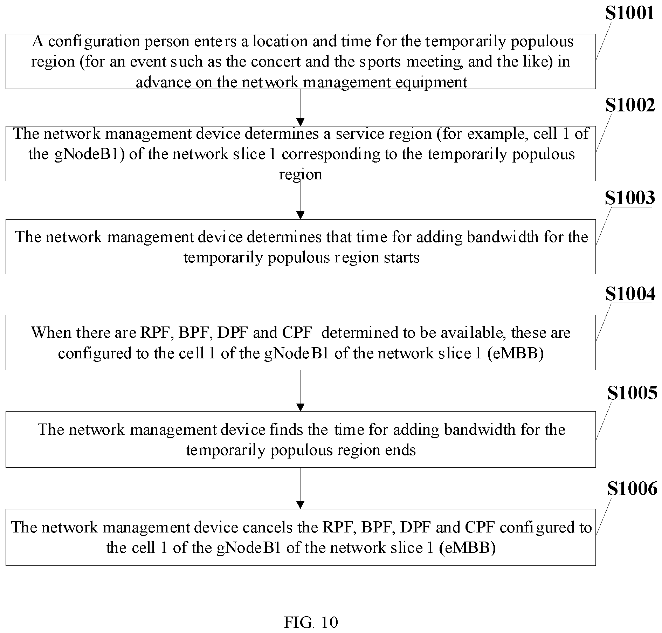

As shown in the above analysis, for some service MEs, a resource requirement may be increased temporarily. For example, in a temporarily populous region, for example, in such scenarios as a concert and a sports meeting, where people are densely gathered for several hours, a requirement for service quantity of an enhanced mobile broadband (eMBB) is large during the hours, and so a processing capability has to be improved. During this time period, an adjustment to a reference relationship between the bearing tree and service tree of the 5G RAN may be performed accordingly, for which one configuration process is seen in steps shown in FIG. 10.

In step 1001, a configuration person enters a location and time for the temporarily populous region (for an event such as the concert and the sports meeting, and the like.) in advance on the network management device.

In step S1002, the network management device determines a service region (for example, cell 1 of the gNodeB1) of the network slice 1 corresponding to the temporarily populous region.

In step SI003, the network management device determines that time for adding bandwidth for the temporarily populous region starts.

In step S1004, when there are RPF, BPF, DPF and CPF determined to be available, these RPF, BPF, DPF and CPF are configured to the cell 1 of the gNodeB1 of the network slice 1 (eMBB).

In step S1005, the network management device finds the time for adding bandwidth for the temporarily populous region ends.

In step S1006, the network management device cancels the RPF, BPF, DPF and CPF configured to the cell 1 of the gNodeB1 of the network slice 1 (eMBB), i.e., the network recovers to a normal configuration after the time for the temporarily populous region ends.

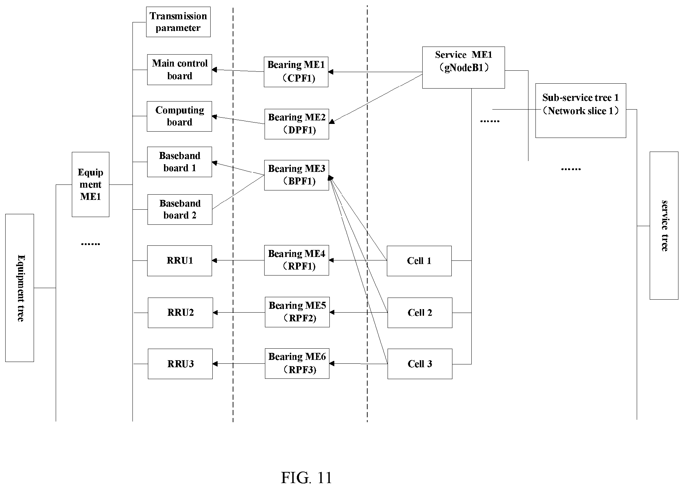

In order to facilitate understanding, a configuration process of a DRAN network element of the 5G RAN is shown as an example for description. As shown in FIG. 11, an exemplary procedure may include the following steps.

In step 1, an equipment ME is configured. In an equipment configuration tree of the network management device, a new equipment ME1 node is established. In this equipment ME1, a single board (including a main control board, a computing board, the baseband board 1, the baseband board 2), an RRU (RRU1, RRU2 and RRU3) and transmission (a transmission parameter required for the network management device to access to the equipment ME) are configured.

In step 2, a bearing ME of the bearing tree is configured, and a reference relationship between the bearing ME of the bearing tree and the equipment ME is established. In a bearing configuration tree of network management, new bearings ME1~ME6 which respectively are CPF1, DPF1, BPF1, RPF1, RPF2, RPF3 are established. A reference relationship (i.e., which equipment MEs to be used for the bearing function) between the bearing tree and the equipment tree is configured. CPF1 uses all computing units of the main control board of the equipment ME1, and DPF1 uses all computing units of the computing board of the equipment ME1. BPF1 is a baseband cell of the baseband board 1 and baseband board 2. RPF1 uses the RRU1 of the equipment ME1, RPF2 uses the RRU2 of the equipment ME1, and RPF3 uses the RRU3 of the equipment ME1.

In step 3, a service ME is configured and a reference relationship between the service ME and the bearing ME is established. In a service configuration tree (eMBB slice) of network management, the service ME1 (gNodeB1) of the network slice 1 is established, in which three cells (cell 1, cell 2 and cell 3) are configured. A reference relationship (i.e., which bearing MEs to be used for a service) between the service ME and the bearing ME is configured. All cells of the gNode B1 use CPF1 and DPF1. All baseband processing of the three cells (cell 1, cell 2 and cell 3) uses BPF1. Radio frequency respectively use RPF1, RPF2 and RPF3.

It is seen from FIG. 11 that the network management device distributes bearing or service configurations. An equipment corresponding to bearing or service configurations may be found according to the reference relationship shown in FIG. 11, and then the bearings or service configurations may be distributed to an equipment corresponding to bearing or service configurations. That is, a "three-tree" configuration method as shown in the embodiment is only a model establishment method or a configuration method on a network management device, but substantially is still configuration on the equipment and the service thereon.

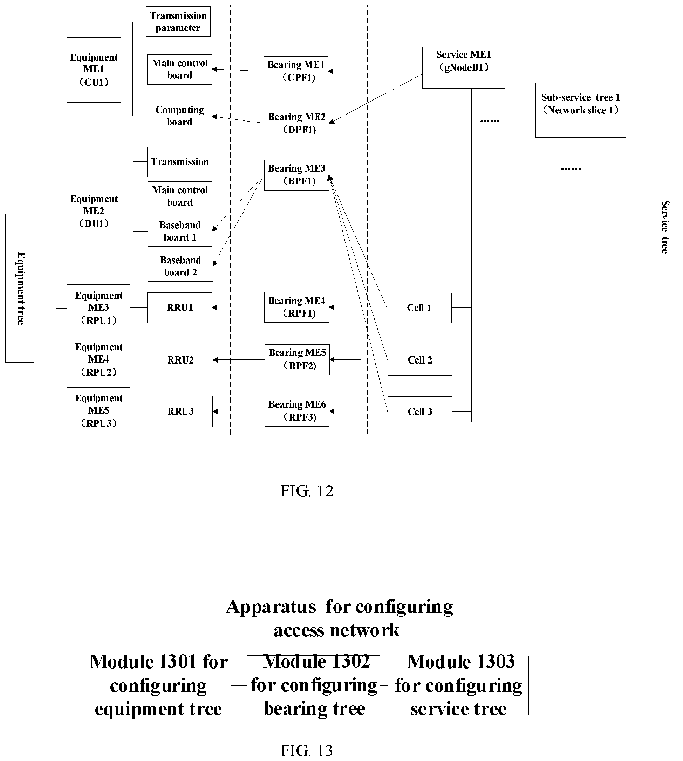

FIG. 12 shows a configuration embodiment in which CU and DU are separated into five equipment network elements in the 5G RAN. The configuration of the bearing ME and the service ME is the same as FIG. 11 except for the step 1 of configuration of the equipment ME (FIG. 11 shows one equipment ME while FIG. 12 shows five equipment MEs). It is seen that when there are multiple types and large amount of equipment MEs, the configuration process of the "three-tree" configuration method in this embodiment is clear and convenient and may meet requirements of different equipment MEs and service MEs.

### Embodiment 3

This embodiment provides an apparatus for configuring access network, applied to various network management device. Functions of modules in the apparatus for configuring access network may be implemented through, but not limited to, a controller or a processor in the network management device. As shown in FIG. 13, the apparatus for configuring access network includes: a module 1301 for configuring an equipment tree, an equipment tree including at least one equipment managed element (ME).

In one example of this embodiment, the module 1301 for configuring an equipment tree may manage all equipment in one network in one equipment tree, i.e., the entire network is one topology. Alternatively, it should be understood that in another example, the module 1301 for configuring an equipment tree may manage all equipment in one network grouped into two or more equipment trees.

In this embodiment, the equipment ME may be an equipment unit manageable by any network management device. For example, the equipment ME may comprise, but not limited to, any one of: a central unit (CU), a distributed unit (DU), a central unit-control plane (CU-C), a central unit-user plane (CU-U), a radio processing unit (RPU), a baseband processing unit (BPU) and a distributed radio access network (DRAN).

In this embodiment, when the module 1301 for configuring an equipment tree detects that a new equipment is added into the network, the new equipment may be taken as an equipment ME to be added to the equipment tree and to be configured. When the module 1301 for configuring an equipment tree detects that a particular equipment ME in the equipment tree is removed, the equipment ME may be deleted from the equipment tree. When the module 1301 for configuring an equipment tree detects that a resource of a particular equipment ME in the equipment tree is updated, configuration information of the equipment ME may be correspondingly updated in the equipment tree.

In this embodiment, the module 1301 for configuring an equipment tree in the equipment tree is, but is not limited to, configuring at least one of: a transmission parameter, a single board parameter, frame information, rack information, and a remote radio unit (RRU) parameter.

In this embodiment, when the module 1301 for configuring an equipment tree configures the equipment ME, specific contents to be configured may be selected according to, but are not limited to, at least one of: a particular type and a requirement of a particular application scenario of the equipment ME

The apparatus for configuring access network further includes: a module 1302 for configuring a bearing tree, configuring the bearing tree including configuring the reference relationship between at least one bearing ME in the bearing tree and the equipment ME in the equipment tree.

In this embodiment, the module 1302 for configuring a bearing tree may complete configuring the reference relationship between the bearing ME in the bearing tree and the equipment ME in the equipment tree when configuring the bearing ME of the bearing tree, or may perform real-time configuration when the bearing ME is referenced by the service ME. Alternatively, a reference relationship between one part of bearing MEs and corresponding equipment MEs thereof may be configured upon configuring the bearing MEs, while a reference relationship between the other part of bearing MEs and corresponding equipment MEs thereof may be configured in real time when the bearing MEs are referenced by a service ME.

In this embodiment, the bearing MEs may be configured in real time by the module 1302 for configuring a bearing tree according to a current network service requirement. Alternatively, a certain amount of the bearing MEs may be configured first by the module 1302 for configuring a bearing tree, and the bearing MEs may be increased or reduced according to a subsequent service requirement.

In this embodiment, the module 1302 for configuring a bearing tree is configuring the bearing ME of the bearing tree, configuring the bearing ME of the bearing tree includes, but is not limited to, configuring a type of the bearing ME. In addition, the specific type of the bearing ME may be flexibly set according to a service requirement. For example, the type of the bearing MEs includes, but is not limited to, at least one of: CPF, DPF, BPF and RPF.

In this embodiment, the module 1302 for configuring a bearing tree is configuring the reference relationship between the bearing ME of the bearing tree and corresponding equipment MEs in the equipment tree, configuring the reference relationship between the bearing ME of the bearing tree and corresponding equipment MEs in the equipment tree may be, but not limited to, selecting the corresponding equipment ME from the equipment ME in the equipment tree according to the type of the bearing ME. In this embodiment, when a particular bearing ME of the bearing tree is deleted, the module 1302 for configuring a bearing tree may further release an equipment ME referenced by the particular bearing ME, so that the released equipment ME is referenced by another bearing ME, thereby promoting coordination and use efficiency of resources.

In this embodiment, when a type of a particular bearing ME in the bearing tree changes, the module 1302 for configuring a bearing tree may also update an equipment ME referenced by the particular bearing ME accordingly with regard to the bearing ME whose type has changed. In this embodiment, when an equipment ME referenced by a particular bearing ME is deleted from the equipment tree or a state of the equipment ME becomes unavailable, the module 1302 for configuring a bearing tree may update an equipment ME adaptively for the bearing ME.

In configuring bearing tree, the module 1302 for configuring a bearing tree may take an entire network as a topology, i.e., all bearing MEs in the network are configured in one bearing tree. Alternatively, the bearing tree configuration module 1302 may use a plurality of bearing trees to perform configuration on bearing MEs in one network as required.

A module 1303 for configuring a service tree is configuring a service tree, configuring a service tree including configuring a reference relationship between at least one service ME in the service tree and a bearing ME in the bearing tree.

In this embodiment, the module 1303 for configuring a service tree may manage services in various network application scenarios in one sub-service tree, so that the service tree may be better meet application scenarios with services of multiple types and large amount. For example, the module 1303 for configuring a service tree may take one network slice as one sub-service tree. Service MEs in one network slice are located in a sub-service tree corresponding to the network slice. In addition, the network slice may be configured by the slicing provider itself, each service ME being one base station (that is, a gNodeB in 5G).

In one example of this embodiment, when a particular service ME of the sub-service tree is deleted, the module 1303 for configuring a service tree may further be used to release a bearing ME referenced by the particular service ME and the particular service ME, so as to facilitate the bearing ME being referenced by another ME in need.

In this embodiment, the module 1303 for configuring a service tree may select a bearing ME corresponding to the service ME from among the bearing ME of the bearing tree according to a service requirement of the service ME. The service requirement in this embodiment may include, but is not limited to, at least one of: a bandwidth requirement and a service time requirement.

In one example of this embodiment, when a particular service ME of the sub-service tree is a service ME for providing a type of timing service, an enabled time period of a reference relationship between the service ME for providing a type of timing service and a corresponding bearing ME is configured by the module 1303 for configuring a service tree according to the service time period of the the service ME for providing a type of timing service. During a time beyond the enabled time period, the bearing ME may be distributed to another service ME in need, thereby further improving use efficiency of the bearing ME. In this embodiment, resource requirements of some service MEs may be changing. For example, a bandwidth of a particular service ME may need to be increased within a time period. In order to meet the need, in this embodiment, configuring the reference relationship between the service ME and the bearing ME in the bearing tree may further include, but may not be limited to, the following dynamic configuration process. The module 1303 for configuring a service tree may further be used to update a bearing ME corresponding to a particular service ME according to a resource requirement change of the service ME when the resource requirement of the service ME changes. This dynamic configuration process not only meets a dynamic change in a service resource requirement, but also improves a resource use efficiency as much as possible, thereby resulting in meeting service requirements of various types in a better way and enabling the network to have a best effect.

### Embodiment 4

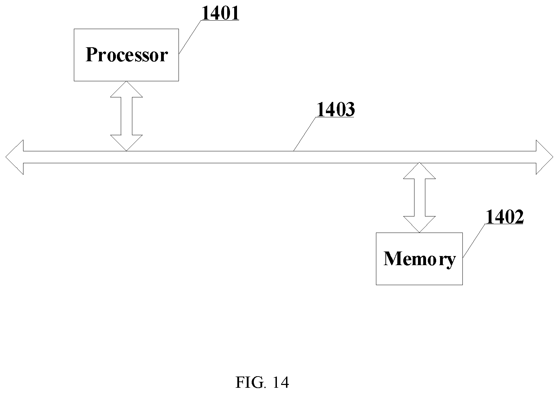

This embodiment further provides a network management device, as shown in FIG. 14, which includes a processor 1401, a memory 1402 and a communication bus 1403. The communication bus 1403 is configured to implement communication connection between the processor 1401 and the memory 1402. In one example, the processor 1401 may be configured to execute one or more computer programs stored in the memory 1402 to perform steps of the method for configuring access network according to the above embodiments.

This embodiment further provides a computer-readable storage medium including volatile, non-volatile, removable and irremovable media implemented in any method or technology for storing information (such as a computer readable instruction, a data structure, a computer program module or other data). The computer readable storage media includes, but is not limited to, a random access memory (RAM), a read-only memory (ROM), and an electrically erasable programmable read only memory (EEPROM), a flash memory or another storage technology, a compact disc read-only memory (CD-ROM), a digital versatile disc (DVD) or another optical disc storage, a magnetic cassette, a magnetic tape, a magnetic disc storage or another magnetic storage device, or any other media that may be used to store expected information and that is accessible by a computer.

In one example, the computer readable storage medium in this embodiment may be used for storing one or more computer programs executable by one or more processors to perform steps of the method for configuring access network in the above embodiments.

This embodiment further provides a computer program (or computer software) that may be distributed on the computer readable medium and may be executed by a computing device to perform at least one step of the method for configuring access network as shown in the above embodiments. Besides, in some conditions, at least one step as shown or described may be performed in an order different from those described in the above embodiments.

This embodiment further provides a computer program product including a computer readable device storing a computer program as shown in the above. The computer readable device in this embodiment may include the computer readable storage medium as shown in the above.

Accordingly, those skilled in the art shall understand that function modules/units in all or some steps, systems and devices in the above methods may be implemented as software (which may be implemented by a computer program code executable by a computing device), firmware, hardware or a combination thereof. In a hardware implementation manner, division of functional modules/units mentioned in the above description may not necessarily correspond to a division of physical components. For example, a physical component may have multiple functions, or one function or step may be cooperatively implemented by a plurality of physical components. Some or all physical components may be implemented as software implemented by a processor such as a central processor, a digital signal processor or a microprocessor, or may be implemented as hardware or an integrated circuit such as an application specific integrated circuit.

In addition, it is known by those skilled in the art that a communication medium generally includes a computer readable instruction, a data structure, a computer program module or other data in a carrier or a modulation data signal of another type like a transmission mechanism, and may include any information delivery media. Therefore, the present disclosure is not limited to any specific hardware and software combination.

## Claims

1. A method for configuring a radio access network, comprising:
configuring (S201) an equipment tree, the equipment tree comprising equipment managed elements, MEs, wherein the equipment MEs comprise a central unit, CU, a distributed unit, DU, a central unit-control plane, CU-C, a central unit-user plane, CU-U, a radio processing unit, RPU, a baseband processing unit, BPU, and a distributed radio access network, DRAN;
configuring (S202) a bearing tree, configuring a bearing tree (S202) comprising configuring a reference relationship between at least one bearing ME in the bearing tree and an equipment ME in the equipment tree, wherein a type of each of the at least one bearing ME comprises one of a controller plane function, CPF, a user plane function, DPF, a baseband processing function, BPF, and a radio processing function, RPF, wherein the reference relationship between bearing ME of the at least one bearing ME in the bearing tree and the equipment ME in the equipment tree indicates which equipment ME is used by the respective bearing ME; and
configuring (S203) a service tree, configuring a service tree (S203) comprising configuring a reference relationship between at least one service ME in the service tree and a bearing ME in the bearing tree, wherein the at least one service ME comprises a base station, wherein the reference relationship between service ME of the at least one service ME in the service tree and the bearing ME in the bearing tree indicates which bearing ME is used by the respective service ME.

2. The method for configuring access network according to claim 1, wherein configuring the equipment tree (S201) comprises configuring at least one of the equipment ME:
a transmission parameter, a single board parameter, frame information, rack information, and a remote radio unit RRU parameter.

3. The method for configuring access network according to claim 1 or 2, wherein configuring the reference relationship between at least one bearing ME in the bearing tree and equipment MEs in the equipment tree comprises:
selecting an equipment ME corresponding to the bearing ME from among the equipment ME in the equipment tree according to a type of the bearing ME.

4. The method for configuring access network according to claim 1 or 2, wherein configuring the bearing tree (S202) further comprises: releasing an equipment ME referenced by a particular bearing ME when the particular bearing ME of the bearing tree is deleted

5. The method for configuring access network according to claim 1 or 2, wherein configuring the service tree (S203) further comprises: releasing a particular service ME and a bearing ME referenced by the particular service ME when the particular service ME of the service tree is deleted.

6. The method for configuring access network according to claim 1 or 2, wherein the service tree comprises at least one sub-service tree, one sub-service tree is one network slice, and the service ME in one network slice is located in a sub-service tree corresponding to the network slice.

7. The method for configuring access network according to claim 1 or 2, wherein configuring the reference relationship between the at least one service ME in the service tree and the bearing ME in the bearing tree comprises:
selecting a bearing ME corresponding to the service ME from among the bearing ME in the bearing tree according to a service requirement of the service ME.

8. The method for configuring access network according to claim 7, wherein configuring the reference relationship between the at least one service ME in the service tree and the bearing ME in the bearing tree further comprises:
configuring an enabled time period of a reference relationship between a service ME for providing a type of timing service and a bearing ME corresponding to the service ME for providing a type of timing service according to a service time period of the service ME for providing a type of timing service when a particular service ME is the service ME for providing a type of timing service.

9. The method for configuring access network according to claim 7, wherein configuring the reference relationship between the at least one service ME in the service tree and the bearing ME in the bearing tree comprises:
updating a bearing ME corresponding to a particular service ME according to a resource requirement change to the particular service ME when the resource requirement of the particular service ME changes.

10. A network management device, comprising a processor, a memory, and a communication bus, wherein the communication bus is configured to connect the processor and the memory, and the processor is configured to execute a computer program stored in the memory which, when executed by the processor, causes the network management device to perform the steps of the method for configuring a radio access network according to any one of claims 1 to 9.

11. A computer-readable storage medium storing one or more computer programs which, when executed by one or more processors of a network management device, cause the network management device to perform the steps of the method for configuring a radio access network according to any one of claims 1 to 9.

## Patentansprüche

1. Verfahren zum Konfigurieren eines Funkzugangsnetzes, umfassend:
Konfigurieren (S201) eines Betriebsmittelbaums, wobei der Betriebsmittelbaum betriebsmittel-verwaltete Elemente, MEs, umfasst,
wobei die Betriebsmittel-MEs eine Zentraleinheit, CU, eine verteilte Einheit, DU, eine Zentraleinheit-Kontrollschicht, CU-C, eine Zentraleinheit-Benutzerschicht, CU-U, eine Funk-Verarbeitungseinheit, RPU, eine Basisband-Verarbeitungseinheit, BPU, und ein verteiltes Funkzugangsnetz, DRAN, umfassen;
Konfigurieren (S202) eines Lagerbaums, wobei das Konfigurieren eines Lagerbaums (S202) das Konfigurieren einer Referenzbeziehung zwischen mindestens einem Lager-ME im Lagerbaum und einem Betriebsmittel-ME im Betriebsmittelbaum umfasst, wobei ein Typ von jedem der mindestens einen Lager-MEs eine von einer Kontrollschichtfunktion, CPF, einer Benutzerschichtfunktion, DPF, einer Basisband-Verarbeitungsfunktion, BPF, und einer Funkverarbeitungsfunktion, RPF, umfasst, wobei die Referenzbeziehung zwischen einem Lager-ME des mindestens einen Lager-MEs im Lagerbaum und dem Betriebsmittel-ME im Betriebsmittelbaum angibt, welches Betriebsmittel-ME vom jeweiligen Lager-ME verwendet wird; und
Konfigurieren (S203) eines Dienstbaums, wobei das Konfigurieren eines Dienstbaums (S203) das Konfigurieren einer Referenzbeziehung zwischen mindestens einem Dienst-ME im Dienstbaum und einem Lager-ME im Lagerbaum umfasst, wobei das mindestens eine Dienst-ME eine Basisstation umfasst, wobei die Referenzbeziehung zwischen einem Dienst-ME des mindestens einen Dienst-MEs im Dienstbaum und dem Lager-ME im Lagerbaum angibt, welches Lager-ME vom jeweiligen Dienst-ME verwendet wird.

2. Verfahren zum Konfigurieren eines Zugangsnetzes nach Anspruch 1, wobei das Konfigurieren des Betriebsmittelbaums (S201) das Konfigurieren mindestens eines der Betriebsmittel-MEs umfasst:
einen Übertragungsparameter, einen Einzelplatinenparameter, Rahmeninformationen, Rack-Informationen und einen RRU-Parameter für entfernte Funkeinheiten.

3. Verfahren zum Konfigurieren eines Zugangsnetzes nach Anspruch 1 oder 2, wobei das Konfigurieren der Referenzbeziehung zwischen mindestens einem Lager-ME im Lagerbaum und Betriebsmittel-MEs im Betriebsmittelbaum umfasst:
Auswählen eines Betriebsmittel-MEs, das dem Lager-ME entspricht, aus dem Betriebsmittel-ME im Betriebsmittelbaum, gemäß einem Typ des Lager-MEs.

4. Verfahren zum Konfigurieren eines Zugangsnetzes nach Anspruch 1 oder 2, wobei das Konfigurieren des Lagerbaums (S202) ferner umfasst: Freigeben eines Betriebsmittel-MEs, das von einem bestimmten Lager-ME referenziert wird, wenn das bestimmte Lager-ME des Lagerbaums gelöscht wird.

5. Verfahren zum Konfigurieren eines Zugangsnetzes nach Anspruch 1 oder 2, wobei das Konfigurieren des Dienstbaums (S203) ferner umfasst: Freigeben eines bestimmten Dienst-MEs und eines Lager-MEs, das vom bestimmten Dienst-ME referenziert wird, wenn das bestimmte Dienst-ME des Dienstbaums gelöscht wird.

6. Verfahren zum Konfigurieren eines Zugangsnetzes nach Anspruch 1 oder 2, wobei der Dienstbaum mindestens einen Unterdienstbaum umfasst, wobei ein Unterdienstbaum ein Netzwerk-Slice ist und sich das Dienst-ME in einem Netzwerk-Slice in einem Unterdienstbaum befindet, der dem Netzwerk-Slice entspricht.

7. Verfahren zum Konfigurieren eines Zugangsnetzes nach Anspruch 1 oder 2, wobei das Konfigurieren der Referenzbeziehung zwischen dem mindestens einen Dienst-ME im Dienstbaum und dem Lager-ME im Lagerbaum umfasst:
Auswählen eines Lager-MEs, das dem Dienst-ME entspricht, aus dem Lager-ME im Lagerbaum, gemäß einer Dienstanforderung des Dienst-MEs.

8. Verfahren zum Konfigurieren eines Zugangsnetzes nach Anspruch 7, wobei das Konfigurieren der Referenzbeziehung zwischen dem mindestens einen Dienst-ME im Dienstbaum und dem Lager-ME im Lagerbaum ferner umfasst:
Konfigurieren eines aktivierten Zeitraums einer Referenzbeziehung zwischen einem Dienst-ME zum Erstellen eines Typs von Zeitgebungsdienst und einem Lager-ME, das dem Dienst-ME zum Erstellen eines Typs von Zeitgebungsdienst entspricht, gemäß einem Dienstzeitraum des Dienst-MEs zum Erstellen eines Typs von Zeitgebungsdienst, wenn ein bestimmtes Dienst-ME das Dienst-ME zum Erstellen eines Typs von Zeitgebungsdienst ist.

9. Verfahren zum Konfigurieren eines Zugangsnetzes nach Anspruch 7, wobei das Konfigurieren der Referenzbeziehung zwischen dem mindestens einen Dienst-ME im Dienstbaum und dem Lager-ME im Lagerbaum umfasst:
Aktualisieren eines Lager-MEs, das einem bestimmten Dienst-ME entspricht, gemäß einer Ressourcenanforderungsänderung an das bestimmte Dienst-ME, wenn sich die Ressourcenanforderung des bestimmten Dienst-MEs ändert.

10. Netzwerkverwaltungsvorrichtung, einen Prozessor, einen Speicher und einen Kommunikationsbus umfassend, wobei der Kommunikationsbus konfiguriert ist, um den Prozessor und den Speicher zu verbinden, und der Prozessor konfiguriert ist, um ein im Speicher gespeichertes Computerprogramm auszuführen, das, wenn es vom Prozessor ausgeführt wird, die Netzwerkverwaltungsvorrichtung veranlasst, die Schritte des Verfahrens zum Konfigurieren eines Funkzugangsnetzes nach einem der Ansprüche 1 bis 9 durchzuführen.

11. Computerlesbares Speichermedium, das ein oder mehrere Computerprogramme speichert, die, wenn sie von einem oder mehreren Prozessoren einer Netzwerkverwaltungsvorrichtung ausgeführt werden, die Netzwerkverwaltungsvorrichtung veranlassen, die Schritte des Verfahrens zum Konfigurieren eines Funkzugangsnetzes nach einem der Ansprüche 1 bis 9 durchzuführen.

## Revendications

1. Procédé pour la configuration d'un réseau d'accès radio, comprenant :
la configuration (S201) d'une arborescence des équipements, l'arborescence des équipements comprenant des éléments gérés, ME, d'équipement, dans lequel les ME d'équipements comprennent une unité centrale, CU, une unité distribuée, DU, une unité centrale-plan de commande, CU-C, une unité centrale-plan d'utilisateur, CU-U, une unité de traitement radio, RPU, une unité de traitement en bande de base, BPU, et un réseau d'accès radio distribué, DRAN ;
la configuration (S202) d'une arborescence de support, la configuration d'une arborescence de support (S202) comprenant la configuration d'une relation de référence entre au moins un ME de support dans l'arborescence de support et un ME d'équipement dans l'arborescence des équipements, dans lequel un type de chacun de l'au moins un ME de support comprend l'une parmi une fonction de plan de contrôleur, CPF, une fonction de plan d'utilisateur, DPF, une fonction de traitement en bande de base, BPF, et une fonction de traitement radio, RPF, dans lequel la relation de référence entre un ME de support de l'au moins un ME de support dans l'arborescence de support et le ME d'équipement dans l'arborescence des équipements indique quel ME d'équipement est utilisé par le ME de support respectif ; et
la configuration (S203) d'une arborescence des services, la configuration d'une arborescence des services (S203) comprenant la configuration d'une relation de référence entre au moins un ME de service dans l'arborescence des services et un ME de support dans l'arborescence de support, dans lequel l'au moins ME de service comprend une station de base, dans lequel la relation de référence entre un ME de service de l'au moins un ME de service dans l'arborescence des services et le ME de support dans l'arborescence de support indique quel ME de support est utilisé par le ME de service respectif.

2. Procédé pour la configuration d'un réseau d'accès selon la revendication 1, dans lequel la configuration de l'arborescence des équipements (S201) comprend la configuration d'au moins l'un du ME d'équipement :
un paramètre de transmission, un paramètre de carte unique, des informations de trame, des informations de baie, et un paramètre d'unité radio distante, RRU.

3. Procédé pour la configuration d'un réseau d'accès selon la revendication 1 ou 2, dans lequel la configuration de la relation de référence entre au moins un ME de support dans l'arborescence de support et des ME d'équipement dans l'arborescence des équipements comprend :
la sélection d'un ME d'équipement correspondant au ME de support parmi les ME d'équipement dans l'arborescence des équipements selon un type du ME de support.

4. Procédé pour la configuration d'un réseau d'accès selon la revendication 1 ou 2, dans lequel la configuration de l'arborescence de support (S202) comprend en outre : la libération d'un ME d'équipement référencé par un ME de support particulier lorsque le ME de support particulier de l'arborescence de support est supprimé.

5. Procédé pour la configuration d'un réseau d'accès selon la revendication 1 ou 2, dans lequel la configuration de l'arborescence des services (S203) comprend en outre : la libération d'un ME de service particulier et d'un ME de support référencé par le ME de service particulier lorsque le ME de service particulier de l'arborescence des services est supprimé.

6. Procédé pour la configuration d'un réseau d'accès selon la revendication 1 ou 2, dans lequel l'arborescence des services comprend au moins une sous-arborescence des services, une sous-arborescence des services est une tranche de réseau, et le ME de service dans une tranche de réseau est situé dans une sous-arborescence des services correspondant à la tranche de réseau.

7. Procédé pour la configuration d'un réseau d'accès selon la revendication 1 ou 2, dans lequel la configuration de la relation de référence entre l'au moins un ME de service dans l'arborescence des services et le ME de support dans l'arborescence de support comprend :
la sélection d'un ME de support correspondant au ME de service parmi les ME de support dans l'arborescence de support selon une exigence de service du ME de service.

8. Procédé pour la configuration d'un réseau d'accès selon la revendication 7, dans lequel la configuration de la relation de référence entre l'au moins un ME de service dans l'arborescence des services et le ME de support dans l'arborescence de support comprend en outre :
la configuration d'une période temporelle activée d'une relation de référence entre un ME de service pour la fourniture d'un type de service de temporisation et un ME de support correspondant au ME de service pour la fourniture d'un type de service de temporisation selon une période temporelle de service du ME de service pour la fourniture d'un type de service de temporisation lorsqu'un ME de service particulier est le ME de service pour la fourniture d'un type de service de temporisation.

9. Procédé pour la configuration d'un réseau d'accès selon la revendication 7, dans lequel la configuration de la relation de référence entre l'au moins un ME de service dans l'arborescence des services et le ME de support dans l'arborescence de support comprend :
la mise à jour d'un ME de support correspondant à un ME de service particulier selon un changement d'exigence de ressource vers le ME de service particulier lorsque l'exigence de ressource du ME de service particulier change.

10. Dispositif de gestion de réseau, comprenant un processeur, une mémoire, et un bus de communication, dans lequel le bus de communication est configuré pour connecter le processeur et la mémoire, et le processeur est configuré pour exécuter un programme d'ordinateur stocké dans la mémoire qui, lors de son exécution par le processeur, amène le dispositif de gestion de réseau à réaliser les étapes du procédé pour la configuration d'un réseau d'accès radio selon l'une quelconque des revendications 1 à 9.

11. Support de stockage lisible par ordinateur stockant un ou plusieurs programmes d'ordinateur qui, lors de leur exécution par un ou plusieurs processeurs d'un dispositif de gestion de réseau, amènent le dispositif de gestion de réseau à réaliser les étapes du procédé pour la configuration d'un réseau d'accès radio selon l'une quelconque des revendications 1 à 9.
